# EUROPÄISCHE PATENTSCHRIFT

(11) **EP 1 586 518 B1**
(45) Veröffentlichungstag und Bekanntmachung des Hinweises auf die Patenterteilung: **16.08.2006**
(21) Anmeldenummer: 04011528.9
(22) Anmeldetag: 14.05.2004
(51) Int. Cl.: B65G 21/18

(54) **Spiralfördereinrichtung**
Helical conveyor
Transporteur héliocoidal

(30) Priorität: 14.04.2004 DE 202004005772 U
(43) Veröffentlichungstag der Anmeldung: 19.10.2005
(73) Patentinhaber: Heinen Freezing GmbH, 26316 Varel (DE)
(72) Erfinder: Praß, Gerold, Dipl.-Ing., 26316 Varel (DE)
(74) Vertreter: Siekmann, Gunnar

(56) Entgegenhaltungen:
- EP-A- 1 198 398
- DE-A1- 2 410 392
- US-A- 4 450 953

## Beschreibung

Die Erfindung betrifft eine Spiralfördereinrichtung zum Konditionieren von Gütern, insbesondere zum Kühlen oder Frosten von Lebensmitteln, mit einem endlosen Förderband, wobei das Förderband gelenkig miteinander verbundene Glieder aufweist und mindestens innenseitig selbststapelnd ausgebildet ist, und mit einer sich drehenden zentralen Trommel zum Antrieb des Förderbandes.

Ein Spiralfördereinrichtung mit einem endlosen Förderband, jedoch ohne eine sich drehende zentrale Trommel ist beispielsweise aus der DE 24 10 392 C2 bekannt. Eine Spiraifördervorrichtung der eingangs genannten Art ist aus der EP 1 198 398 B1 bekannt, wobei hier zwischen der sich drehenden zentralen Trommel und dem Fördergurt Stapelblöcke und ein Führungsband vorgesehen sind.

Der Erfindung liegt die Aufgabe zugrunde, eine Spiralfördereinrichtung der eingangs genannten Art zu schaffen, mit der eine zuverlässige und zugleich einfache Übertragung der Drehbewegung der zentralen Trommel auf das Förderband erreicht wird.

Die Lösung dieser Aufgabe erfolgt mit einer Spiralfördereinrichtung mit den Merkmalen des Patentanspruchs 1. Vorteilhafte Weiterbildungen der Erfindung sind in den Unteransprüchen beschrieben.

Bei einer Spiralfördereinrichtung zum Konditionieren von Gütern, insbesondere zum Kühlen oder Frosten von Lebensmitteln, mit einem endlosen Förderband, wobei das Förderband gelenkig miteinander verbundene Glieder aufweist und mindestens innenseitig selbststapelnd ausgebildet ist, und mit einer sich drehenden zentralen Trommel zum Antrieb des Förderbandes ist es erfindungswesentlich, daß eine umlaufende Antriebskette vorgesehen ist, die einerseits zum Eingriff in die sich drehende zentrale Trommel ausgebildet ist und die andererseits mit mindestens einem Teil einer Lage des endlosen selbststapelnden Förderbandes in Kontakt ist.

Derartige Spiralfördereinrichtungen werden auch als Wendelfördereinrichtungen bezeichnet.

Auf diese Weise wird eine zusätzliche einfache Antriebsmöglichkeit geschaffen, mit der das selbststapelnde Förderbande, insbesondere in der oder den untersten Lagen, zuverlässig angetrieben wird. Das Förderband ist dabei bevorzugt innenseitig und außenseitig selbststapelnd ausgebildet. Es gibt jedoch auch die Möglichkeit, die vorliegende Erfindung mit einem nur innenseitig selbststapelnd ausgebildeten Fördergurt durchzuführen, der außenseitig durch Gurtunterstützungsschienen geführt ist. Der Antrieb des Förderbandes durch die Trommel erfolgt bevorzugt durch Reibgleiten oder Gleitreibung.

Dabei ist die umlaufende Antriebskette in einer bevorzugten Ausführungsform außen auf der zentralen Trommel angeordnet und greift nach innen in die Trommel ein. In einer anderen bevorzugten Ausführungsform ist die umlaufende Antriebskette innen in der sich drehenden zentralen Trommel angeordnet und greift nach außen in diese Trommel ein und durch diese hindurch in das Förderband.

Bevorzugt ist die umlaufende Antriebskette mit der untersten Lage des endlosen selbststapelnden Förderbandes in Kontakt. Dabei ist es bevorzugt, daß die umlaufende Antriebskette unter der untersten Lage des endlosen selbststapelnden Förderbandes angeordnet ist und für dieses zumindest in Teilbereichen eine Auflagefläche bildet. Auf diese Weise wird erreicht, daß die auf der untersten Lage ruhende Gewichtskraft der darüber gestapelten weiteren Lagen von der umlaufenden Antriebskette aufgenommen wird und insbesondere eine zusätzliche Antriebskraft, neben der seitlichen Verbindung mit der sich drehenden zentralen Trommel, insbesondere in die unterste Lage, eingebracht wird.

Die umlaufende Antriebskette weist bevorzugt Vorsprünge zum Eingriff in die zentrale Trommel auf. Die zentrale Trommel ist bevorzugt derart ausgebildet, daß sie senkrechte Leisten aufweist. Zwischen diese Leisten können die Vorsprünge der Antriebskette eingreifen. Die Vorsprünge sind dabei bevorzugt abgerundet ausgebildet und bevorzugt an jedem zweiten Kettenglied der Antriebskette vorgesehen. Die Antriebskette ist bevorzugt als definiertes Verschleißteil ausgebildet. Nach einer vorbestimmten Laufzeit kann daher die Antriebskette, die einen vergleichsweise kleinen Teil der Gesamtanlage darstellt, ausgetauscht werden.

In einer weiteren bevorzugten Ausgestaltung der Erfindung weist die Spiralfördereinrichtung eine Kettentrommel auf, auf der sich die Kette entgegengesetzt zur zentralen Trommel bewegt. Die Kettentrommel kann dabei drehbar ausgebildet sein, sich also mit der Kette mitdrehen. In dieser Ausgestaltung ist die Antriebskette außen umlaufend um die zentrale Trommel angeordnet, und die Kettentrommel befindet sich außerhalb der zentralen Trommel. Bei einer innen in der zentralen Trommel umlaufenden Antriebskette ist die Kettentrommel bevorzugt innerhalb der zentralen Trommel angeordnet, und die Antriebskette läuft gleichgerichtet zur Bewegung der zentralen Trommel. In einer alternativen bevorzugten Ausführungsform kann die Kettentrommel auch als eine Art Kurvenbahn feststehender Elemente ausgebildet sein, auf der sich die Antriebskette bewegt. Die Kettentrommel ist bevorzugt im Übergangsbereich angeordnet, in dem das Förderband auf die zentrale Trommel aufläuft und wieder von ihr abläuft. In diesem Bereich ist nämlich auch der Höhenunterschied zwischen dem Beginn und dem Ende des Eingriffs der Antriebskette in die erfaßten Lagen des selbststapelnden Förderbandes zu überbrücken, da das selbststapelnde Förderband spiralförmig nach oben läuft. Bevorzugt ist die Kettentrommel so dimensioniert, daß die Vorsprünge der Kette nach Ablauf von der Kettentrommel in die zentrale Trommel eingreifen. Dazu muß die Antriebskette auf der Kettentrommel die Strecke von einem ganzzahligen Vielfachen des Abstandes zweier Vorsprünge ablaufen, damit die Vorsprünge oder Nasen wieder in die richtige Lücke der zentralen Trommel eingreifen. Bei der Durchmesserdimensionierung ist dabei zu berücksichtigen, daß die Antriebskette unter einem Winkel auf der Kettentrommel abläuft. Bei einer Anordnung der Antriebskette außen auf der zentralen Trommel beträgt die Umschlingung der Antriebskette um die zentrale Trommel weniger als 360°. Bei Anordnung der Antriebskette innerhalb der zentralen Trommel erhält man eine Umschlingung der zentralen Trommel von mehr als 360°.

In einer bevorzugten Ausführungsform ist die Kettentrommel dabei ohne einen eigenen Antrieb ausgebildet und der Antrieb des Förderbandes erfolgt ausschließlich über die zentrale Trommel und die Antriebskette. In einer anderen bevorzugten Ausführungsform der Erfindung ist die Kettentrommel mit einem Antrieb versehen. Bei einer solchen Ausgestaltung kann zusätzlich eine Antriebskraft von außen über die Kettentrommel eingebracht werden. In einer anderen bevorzugten Weiterbildung der Erfindung ist die unterste Lage des Förderbandes außenseitig bevorzugt auf einer auf Rollen laufenden Kette gelagert. In einer alternativen Ausführungsform ist dort eine Gleitschiene oder sind dort Laufrollen vorgesehen, die die Reibung zwischen der Kette bzw. dem äußeren Randbereich der Kette und der Unterlage minimieren.

Ein weiterer Aspekt der Erfindung besteht in der Bereitstellung einer Antriebskette zur Verwendung in einer Spiralfördereinrichtung nach einem der obengenannten Ansprüche. Dies insbesondere auch unter dem Aspekt, daß die Antriebskette bevorzugt als austauschbares Verschleißteil ausgebildet ist.

Nachfolgend wird die Erfindung anhand eines in der Zeichnung dargestellten Ausführungsbeispiels weiter erläutert. Im einzelnen zeigen die schematischen Darstellungen in:
- Fig. 1:: eine schematische Gesamtansicht einer Spiralfördervorrichtung;
- Fig. 2:: eine perspektivische Ansicht eines Teils der zentralen Trommel mit der Antriebskette und der Kettentrommel;
- Fig. 3:: ein vergrößerter Ausschnitt gemäß Fig. 2 im Bereich der Kettentrommel;
- Fig. 4:: eine Draufsicht auf einen Teilausschnitt der zentralen Trommel und die Kettentrommel;
- Fig. 5:: eine vergrößerte Draufsicht auf die Antriebskette;
- Fig. 6:: eine vergrößerte Seitenansicht der Antriebskette;
- Fig. 7:: eine perspektivische Ansicht eines Teils der zentralen Trommel mit der Antriebskette und der Kettentrommel in einer alternativen Ausführungsform zu Fig. 2;
- Fig. 8:: eine Draufsicht auf einen Teilausschnitt der zentralen Trommel und der Kettentrommel gemäß Fig. 7.

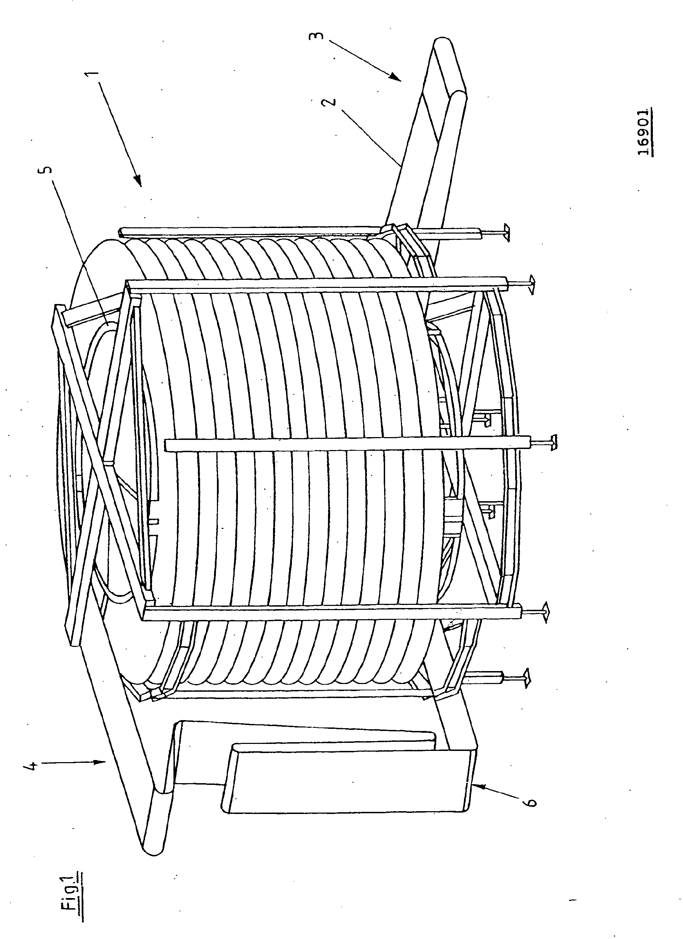

In Fig. 1 ist eine Gesamtansicht der Spiralfördereinrichtung 1 dargestellt, in dem ein selbststapelndes Förderband zum Einsatz kommt, das hier schematisch nur mit 2 und ohne weitere Details dargestellt ist. Das Förderband 2 ist als Endlosförderband ausgebildet, das in einem Einschleusbereich 3 in den eigentlichen spiralförmigen Wendelförderer hineingeführt und dort spiralförmig ansteigend zum oberen geraden Ausschleusbereich 4 geführt wird. Im Bereich der Spiralfördervorrichtung 1 ist eine Behandlungsvielfalt möglich, wie Einfrieren, Erwärmen, Befeuchten und vieles andere mehr. Bevorzugt werden Lebensmittel behandelt. Es können auch andere Waren behandelt, zum Beispiel Bücher getrocknet, werden. Die Spiralfördervorrichtung 1 weist in der Mitte eine Trommel 5 auf, an der das Förderband 2 abgestützt ist und von dieser mitgeführt wird. Es wird dabei nicht ausschließlich die unterste Lage des Förderbandes 2 angetrieben, auf der sich die darüberliegenden Lagen stapeln und mitgeführt werden, sondern es wird jede einzelne Lage des Gurtes durch die innen liegende Trommel 5 angetrieben und das Förderband 2 auf diese Weise bewegt. Femer ist ein Rückführbereich 6 vorgesehen, mit dem das endlose Förderband 2 von dem Ausschleusbereich 4 zum Einschleusbereich 3 zurückgeführt wird. Das Förderband ist gegen die sich drehende zentrale Trommel abgestützt, so daß jede Lage des endlosen Förderbandes von der sich drehenden zentralen Trommel angetrieben wird. Durch die zusätzliche, hier nicht dargestellte Antriebskette, die unterhalb der untersten Lage des Förderbandes 2 läuft, wird einerseits ein Antrieb und gleichzeitig eine Abstützung des Förderbandes erreicht.

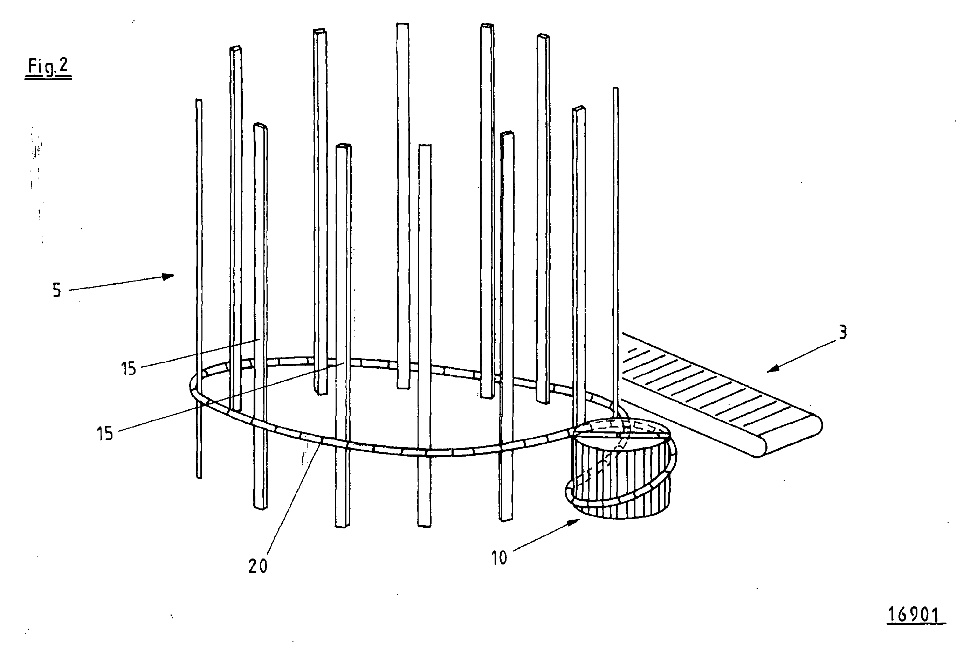

In Fig. 2 ist eine perspektivische Ansicht der Trommel 5 ohne das Förderband und der Zuführeinrichtung 3 dargestellt. Die zentrale Trommel 5 ist im wesentlichen aus vertikalen Stäben 15 gebildet, die durch eine entsprechende Statik miteinander verbunden sind. Auf der Trommel 5 windet sich spiralförmig das Förderband nach oben. Im Bereich der untersten Lage des Förderbandes, die durch die Zuführeinrichtung 3 zugeführt wird, insbesondere unterhalb des an die Trommel 5 anliegenden Innenbereichs der unteren Lage, ist eine umlaufende Antriebskette 20 angeordnet. Es kann sich dabei auch um ein Band, eine Gliederkette oder jede andere Art von Zugmittel handeln. Die Antriebskette 20 läuft ebenfalls spiralförmig um die Antriebstrommel 5 und wird dann um eine neben der Antriebstrommel 5 angeordnete Kettentrommel 10 geführt. Der Drehsinn um die Kettentrommel 10 ist dabei gegenläufig zum Drehsinn um die zentrale Trommel 5. Die Kettentrommel 10 ist dabei benachbart, insbesondere in Drehrichtung der zentralen Trommel 5 vor der Zuführeinrichtung 3 angeordnet. Beim Verlauf um die Kettentrommel 10 wird die Antriebskette 20 dabei spiralförmig nach unten geführt, um so die Höhendifferenz der umlaufenden Antriebskette 20 auszugleichen. Der Höhenausgleich entspricht dabei der Höhe einer Lage des Förderbandes, da die Antriebskette 20 zusammen mit dem Förderband bei einer Umdrehung spiralförmig nach oben geführt ist.

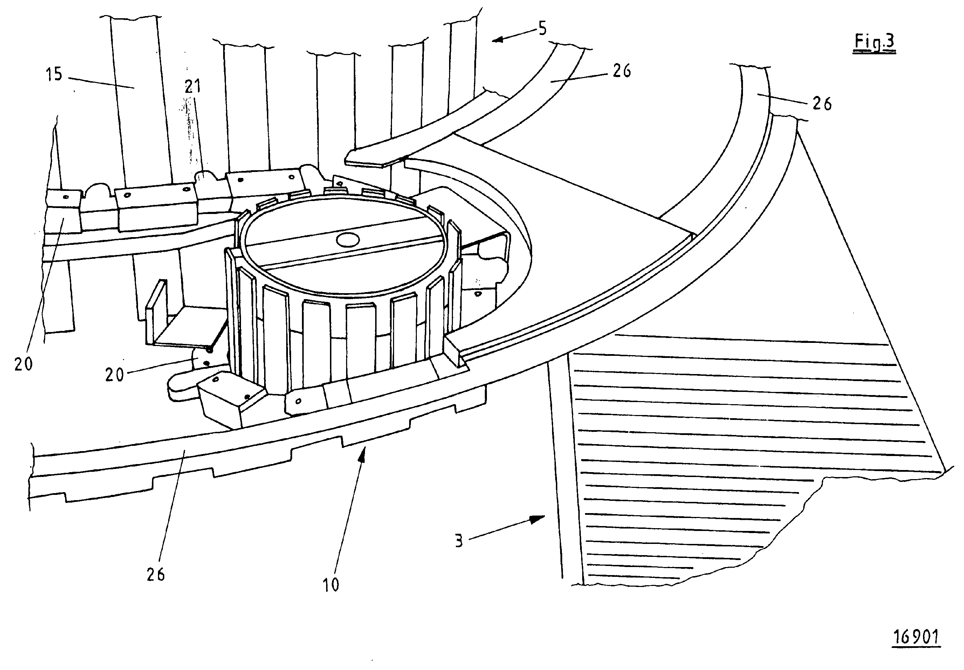

In Fig. 3 ist ein vergrößerter Ausschnitt des Bereiches der Kettentrommel 10 und der Zuführeinrichtung 3 dargestellt. Hier ist auch zu erkennen, daß die unterste Lage des Förderbandes auf einer Führung 26 um die zentrale Trommel 5 herumgeführt ist, wobei auf der inneren Bahn oder dem inneren Bereich der Führung 26 die Antriebskette 20 geführt ist, auf der dann das Förderband 2 innenseitig aufliegt. Einer derartig einseitig betriebenen Antriebskette 20 muß also der innere Bereich der Führung 26 in seiner Höhe unter Berücksichtigung der Höhe der Antriebskette 20 ausgerichtet werden, also gegenüber einer normalen Positionierung oder gegenüber der Positionierung des äußeren Bereiches der Führung 26 um die Höhe der Antriebskette 20 niedriger angeordnet werden. Es ist auch zu erkennen, daß die Antriebskette 20 mit Vorsprüngen 21 in die vertikalen Stäbe 15 eingreift. Die Antriebskette 20 läuft in der Figur von links kommend, dann spiralförmig um die Kettentrommei 10 nach unten und wird dann parallel zur Zuführeinrichtung 3 wieder auf die untere Lage der Führung 26 geführt. Die im rechten Bildbereich dargestellten Führungen 26 enden im Bereich des von unten zugeführten Förderbandes, da das Förderband bevorzugt selbststapelnd ausgebildet ist und nur die unterste Lage durch eine Führung 26 abgestützt werden muß. In anderen Ausführungsformen können auch die Führungen 26 spiralförmig umlaufend ausgebildet sein. Günstigerweise ist auf der Führung 26 eine auf Rollen umlaufende Kette angeordnet, die den äußeren Bereich des Förderbandes reibungsarm trägt. Im Bereich der Zuführeinrichtung muß dabei eine Umlenkung der Kette vorgenommen werden.

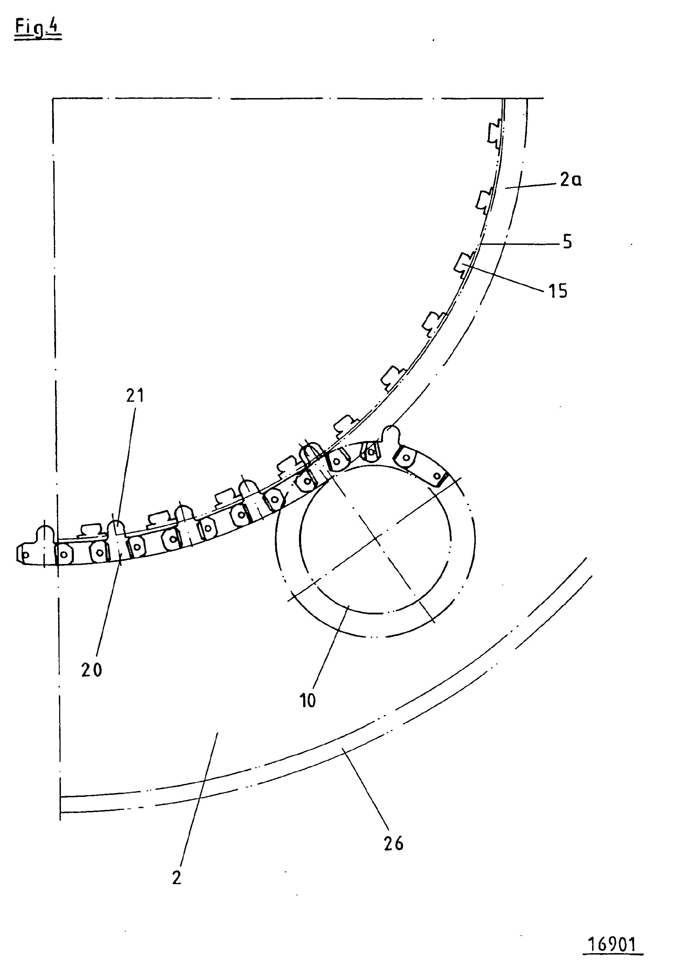

In Fig. 4 ist ein Ausschnitt der zentralen Trommel 5 und der zusätzlichen Kettentrommel 10 dargestellt. Die zentrale Trommel 5 weist eine Reihe von senkrechten Stäben 15 auf, in die die Antriebskette 20 mit ihren Vorsprüngen 21 eingreift, so daß die Antriebskette 20 auf diese Weise schlupfllos von der zentralen Trommel 5 angetrieben wird. Das umlaufende Förderband 2 ist hier nur mit Hilfe der strichpunktierten Linien dargestellt. Die Antriebskette 20 läuft dabei im Bereich der inneren Auflagefläche 2a des Förderbandes 2, während die äußere Auflagefläche 2b des Förderbandes 2 nicht unmittelbar von der Antriebskette erfaßt ist. Es ist jedoch denkbar, hier zusätzliche reibungsvermindernde Elemente vorzusehen. Die Antriebskette 20 greift mit ihren Vorsprüngen 21 in die Leisten der zentralen Trommel 5 ein und wird dann nach knapp einer Umdrehung von der Kettentrommel 10 aufgenommen, die entgegengesetzt zur zentralen Trommel 5 dreht. Die Kettentrommel 10 kann dabei mit oder ohne eigenen Antrieb ausgebildet sein. In einer Ausführungsform erfolgt der Antrieb ausschließlich über die zentrale Trommel 5, und die Kettentrommel 10 dient ausschließlich zur Rückführung der Antriebskette 20 auf ein unteres Niveau. In einer anderen Ausführungsform weist die Kettentrommel 10 einen zusätzlichen Antrieb auf, mit dem über die Antriebskette 20 eine zusätzliche Antriebskraft eingebracht wird. In diesem Fall sind die Vorsprünge 21, die hier in die zentrale Trommel 5 eingreifen, nicht notwendig. Vielmehr ist dann eine Ausbildung von Vorsprüngen, die in die Kettentrommel 10 eingreifen, günstig.

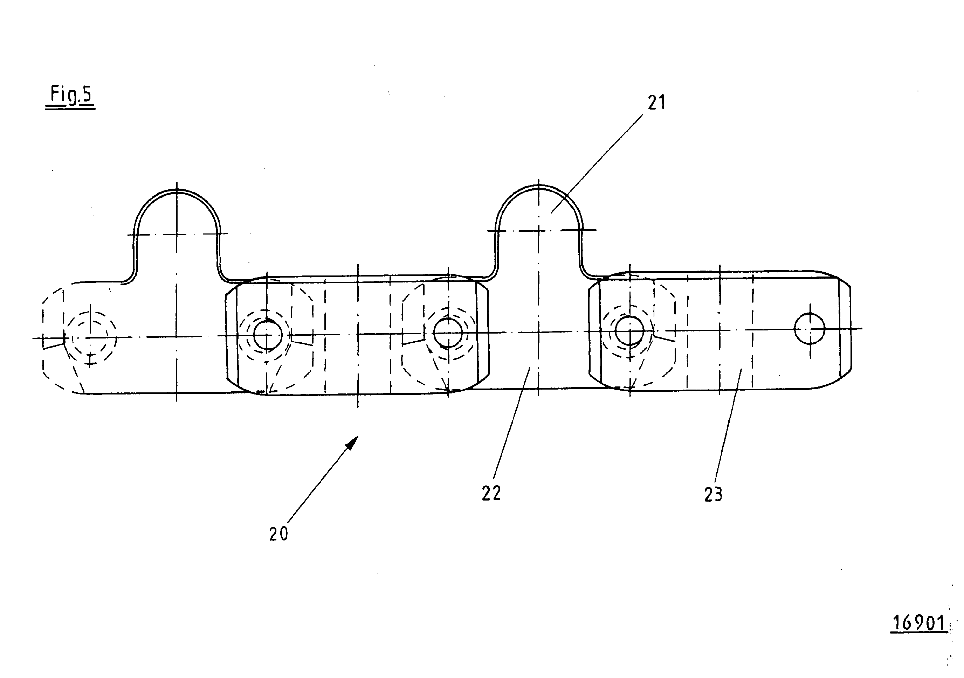

In Fig. 5 ist eine vergrößerte Draufsicht auf die Antriebskette 20 mit den Vorsprüngen 21 dargestellt. Die Antriebskette 20 ist aus zwei verschiedenen Gliederelementen 22 und 23 zusammengesetzt, wobei die Gliederelemente 22 die Vorsprünge 21 aufweisen. Die Vorsprünge 21 sind an ihrer Spitze halbkreisförmig ausgebildet, so daß ein reibungsarmes Eingreifen in die Leisten 15 der zentralen Trommel 5 erreicht wird.

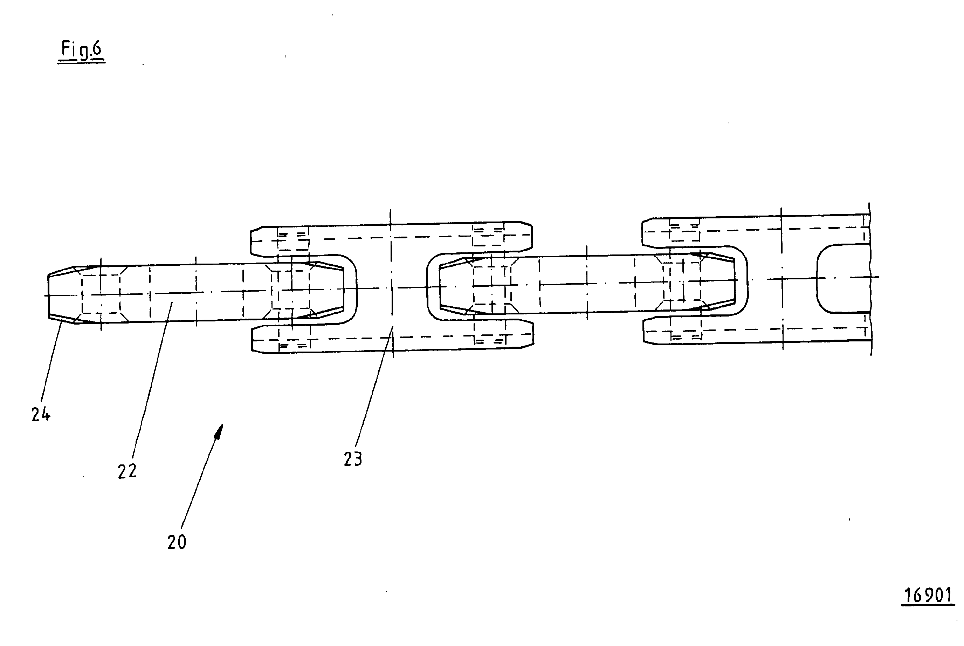

In Fig. 6 ist eine gegenüber der Darstellung in Fig. 4 um 90° gedrehte Antriebskette 20 dargestellt. Dabei ist auch zu erkennen, daß die Glieder 22 der Antriebskette 20 in den Endbereichen 24 schmaler zulaufend ausgebildet sind, so daß eine seitliche Verbiegung in den entsprechenden Ausnehmungen der Kettenglieder 23 möglich ist und auf diese Weise eine Führung um die zentrale Trommel 5 und auch um die Kettentrommel 10 erreicht wird.

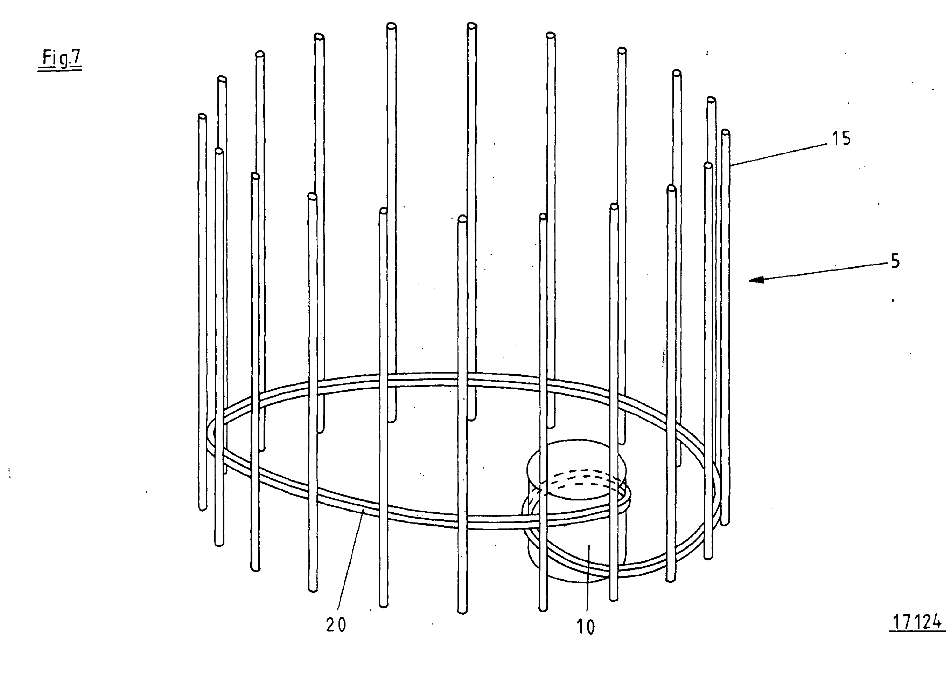

In Fig. 7 ist eine perspektivische Ansicht der Trommel 5 ohne das Förderband und ohne die Zuführeinrichtung 3 dargestellt, wobei hier eine zu Fig. 2 abweichende Ausführungsform dargestellt ist. Die zentrale Trommel 5 ist im wesentlichen aus den vertikalen Stäben 15 gebildet. Die Antriebskette 20 läuft hier im Inneren der Trommel 5 um und greift von innen durch die Stäbe 15 der zentralen Trommel 5 hindurch und greift in den außen liegenden Gurt ein oder untergreift diesen. Die Kettentrommel 10 ist dabei im Inneren der zentralen Trommel 5 angeordnet, und die Antriebskette 20 hat auf der Kettentrommel 10 die gleiche Umlaufrichtung wie im Inneren der Trommel 5. Die Kettentrommel 10 kann dabei entweder als reine Führung dienen oder sich ebenfalls mitdrehen und auch zusätzlich einen eigenen Antrieb enthalten. Durch die Umschlingung der Antriebskette 20 auf der Kettentrommel 10 ergibt sich eine Führung der Antriebskette auf der zentralen Trommel 5 von über 360°.

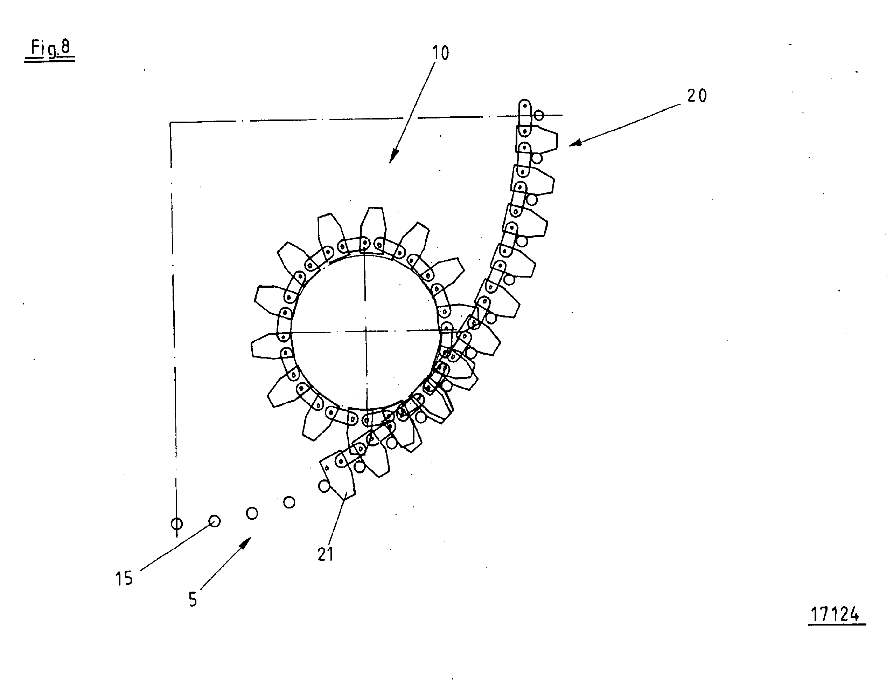

In Fig. 8 ist eine Draufsicht auf einen Teilausschnitt der zentralen Trommel 5 und der Kettentrommel 10 gemäß Fig. 7 dargestellt. Die Antriebskette 20 greift mit ihren Vorsprüngen 21 durch die zentrale Trommel 5 hindurch und liegt mit den Vorsprüngen 21 dabei jeweils auf einer Seite an den senkrechten Stäben 15 an, so daß auf diese Weise eine gleichmäßige Zugbelastung sichergestellt ist. Die Vorsprünge 21 greifen dabei in das außen um die Trommel 5 umlaufende und hier nicht dargestellte Förderband 2 ein. Um die Antriebskette nach einem Umlauf um die zentrale Trommel im Bereich der Zuführeinrichtung wieder auf ein unteres Niveau bringen zu können, wird eine Rückführung der Antriebskette über die Kettentrommel 10 durchgeführt.

## Patentansprüche

1. Spiralfördereinrichtung zum Konditionieren von Gütem, insbesondere zum Kühlen oder Frosten von Lebensmitteln, mit einem endlosen Förderband (2), wobei das Förderband (2) gelenkig miteinander verbundene Glieder aufweist und mindestens innenseitig selbststapelnd ausgebildet ist, und mit einer sich drehenden zentralen Trommel (5) zum Antrieb des Förderbandes (2),
**dadurch gekennzeichnet,**
**daß** eine umlaufende Antriebskette (20) vorgesehen ist, die einerseits in Eingriff mit der sich drehenden zentralen Trommel (5) steht und die andererseits mit mindestens einem Teil einer Lage des endlosen selbststapelnden Förderbandes (2) in Kontakt ist.

2. Spiralfördervorrichtung nach Anspruch 1, **dadurch gekennzeichnet, daß** die umlaufende Antriebskette (20) außen auf der zentralen Trommel (5) umläuft.

3. Spiralfördervorrichtung nach Anspruch 1, **dadurch gekennzeichnet, daß** die umlaufende Antriebskette (20) innen in der zentralen Trommel (5) umläuft.

4. Spiralfördervorrichtung nach einem der vorhergehenden Ansprüche, **dadurch gekennzeichnet, daß** die umlaufende Antriebskette (20) mit der untersten Lage des endlosen selbststapelnden Förderbandes (2) in Kontakt ist.

5. Spiralfördervorrichtung nach einem der vorhergehenden Ansprüche, **dadurch gekennzeichnet, daß** die umlaufende Antriebskette (20) unter der untersten Lage des endlosen selbststapelnden Förderbandes (2) angeordnet ist und für diesen zumindest in Teilbereichen eine Auflagefläche bildet.

6. Spiralfördervorrichtung nach einem der vorhergehenden Ansprüche, **dadurch gekennzeichnet, daß** die umlaufende Antriebskette (20) Vorsprünge (21) zum Eingriff in die zentrale Trommel (5) aufweist.

7. Spiralfördervorrichtung nach einem der vorhergehenden Ansprüche, **dadurch gekennzeichnet, daß** die zentrale Trommel (5) senkrechte Leisten (15) aufweist.

8. Spiralfördervorrichtung nach einem der vorhergehenden Ansprüche, **dadurch gekennzeichnet, daß** die Spiralfördervorrichtung (1) eine Kettentrommel (10) aufweist, auf der sich die Kette entgegengesetzt zur zentralen Trommel (5) bewegt.

9. Spiralfördervorrichtung nach einem der Ansprüche 1 bis 7, **dadurch gekennzeichnet, daß** die Spiralfördervorrichtung eine Kettentrommel (10) aufweist, die innerhalb der zentralen Trommel (5) angeordnet ist.

10. Spiralfördervorrichtung nach einem der Ansprüche 8 oder 9, **dadurch gekennzeichnet, daß** die Kettentrommel (10) so dimensioniert ist, daß die Vorsprünge (21) der Antriebskette (20) nach Ablauf von der Kettentrommel (10) in die zentrale Trommel (5) eingreifen.

11. Spiralfördervorrichtung nach einem der Ansprüche 8 bis 10, **dadurch gekennzeichnet, daß** die Kettentrommel (10) einen eigenen Antrieb aufweist.

12. Spiralfördervorrichtung nach einem der vorhergehenden Ansprüche, **dadurch gekennzeichnet, daß** die Antriebskette als Verschleißteil ausgebildet ist.

13. Spiralfördervorrichtung nach einem der vorhergehenden Ansprüche, **dadurch gekennzeichnet, daß** die unterste Lage des Förderbandes (2) außenseitig durch eine Führung (26) mit reibmindernden Elementen abgestützt ist.

14. Antriebskette zur Verwendung in einer Spiralfördervorrichtung nach einem der vorhergehenden Ansprüche.

## Claims

1. A helical conveyor device for conditioning goods, in particular for cooling of freezing food, with an endless conveyor belt (2), wherein the conveyor belt (2) has links that are articulated to each other and is designed so that it is self-stacking, at least on the inside, and with a rotating central drum (5) for driving the conveyor belt (2), **characterised in that** a circulating drive chain (2) is provided which on the one hand engages with the rotating central drum (5) and on the other is in contact with at least part of a layer of the endless self-stacking conveyor belt (2).

2. The helical conveyor device according to Claim 1, **characterised in that** the circulating drive chain (20) circulates on the outside of the central drum (5).

3. The helical conveyor device according to Claim 1, **characterised in that** the circulating drive chain (2) circulates on the inside of the central drum (5).

4. The helical conveyor device according to any one of the preceding claims, **characterised in that** the circulating drive chain (20) is in contact with the lowest layer of the endless self-stacking conveyor belt (2).

5. The helical conveyor device according to any one of the preceding clams, **characterised in that** the circulating drive chain (20 is arranged underneath the bottommost layer of the endless self-stacking conveyor belt (2) and forms a supporting face for it, at least in partial regions.

6. The helical conveyor device according to any one of the preceding claims, **characterised in that** the circulating drive chain (20) has projections (21) for engaging in the central drum (5).

7. The helical conveyor device according to any one of the preceding claims, **characterised in that** the central drum (5) has vertical strips (15).

8. The helical conveyor device according to any one of the preceding claims, **characterised in that** the helical conveyor device (1) has a chain drum (10) on which the chain moves opposite the central drum (5).

9. The helical conveyor device according to any one of Claims 1 to 7, **characterised in that** the helical conveyor device has a chain drum (10) which is arranged inside the central drum (5).

10. The helical conveyor device according to any one of Claims 8 or 9, **characterised in that** the chain drum (10) is dimensioned so that the projections (21) of the drive chain (20) engage in the central drum (5) after running off the chain drum (10).

11. The helical conveyor device according to any one of Claims 8 to 10, **characterised in that** the chain drum (10) has its own drive.

12. The helical conveyor device according to any one of the preceding claims, **characterised in that** the drive chain is designed as a wearing part.

13. The helical conveyor device according to any one of the preceding claims, **characterised in that** the lowest layer of the conveyor belt (2) is supported on the outside by a guide (26) with friction reducing elements.

14. A drive chain for use in a helical conveyor device according to any one of the preceding claims.

## Revendications

1. Convoyeur en spirales pour le conditionnement de produits, notamment pour refroidir ou pour congeler des aliments, avec une bande transporteuse sans fin (2), la bande transporteuse sans fin (2) comportant des éléments reliés entre eux de façon articulée et étant conçue au moins à l'intérieur de façon auto-empilable, et avec un tambour central rotatif (5) pour entraîner la bande de transport (2),
**caractérisé en ce qu'**on a prévu une chaîne d'entraînement tournante (20) qui d'une part est en engrènement avec le tambour central rotatif (5) et qui d'autre part est en contact avec au moins une partie d'une couche de la bande de transport sans fin auto-empilable (2).

2. Convoyeur en spirales selon la revendication 1, **caractérisé en ce que** la chaîne d'entraînement tournante (20) circule sur l'extérieur du tambour central (5).

3. Convoyeur en spirales selon la revendication 1, **caractérisé en ce que** la chaîne d'entraînement tournante (20) circule à l'intérieur dans le tambour central (5).

4. Convoyeur en spirales selon l'une quelconque des revendications précédentes, **caractérisé en ce que** la chaîne d'entraînement tournante (20) est en contact avec la couche inférieure de la bande transporteuse sans fin auto-empilable (2).

5. Convoyeur en spirales selon l'une quelconque des revendications précédentes, **caractérisé en ce que** la chaîne d'entraînement tournante (20) est disposée sous la couche inférieure de la bande de transport sans fin auto-empilable (2) et forme au moins dans des zones partielles une surface d'appui pour cette dernière.

6. Convoyeur en spirales selon l'une quelconque des revendications précédentes, **caractérisé en ce que** la chaîne d'entraînement tournante (20) comporte des saillies (21) destinées à s'engager dans le tambour central (5).

7. Convoyeur en spirales selon l'une quelconque des revendications précédentes, **caractérisé en ce que** le tambour central (5) comporte des baguettes verticales (15).

8. Convoyeur en spirales selon l'une quelconque des revendications précédentes, **caractérisé en ce que** le convoyeur en spirales (1) comporte un tambour à chaîne (10) sur lequel la chaîne se déplace à contresens par rapport au tambour central (5).

9. Convoyeur en spirales selon l'une quelconque des revendications 1 à 7, **caractérisé en ce que** le convoyeur en spirales (1) comporte un tambour à chaîne (10) qui est disposé au centre du tambour central (5)

10. Convoyeur en spirales selon l'une quelconque des revendications 8 ou 9, **caractérisé en ce que** la tambour à chaîne (10) est dimensionné de façon à ce qu'après s'être déroulées du tambour à chaîne (10), les saillies (21) de la chaîne d'entraînement (20) s'engrènent dans le tambour central (5).

11. Convoyeur en spirales selon l'une quelconque des revendications 8 à 10, **caractérisé en ce que** le tambour à chaîne (10) comporte un propre entraînement.

12. Convoyeur en spirales selon l'une quelconque des revendications précédentes, **caractérisé en ce que** la chaîne d'entraînement est conçue sous la forme d'une pièce d'usure.

13. Convoyeur en spirales selon l'une quelconque des revendications précédentes, **caractérisé en ce que** la couche inférieure de la bande de transport (2) est soutenue côté extérieur par un guidage (26) avec des éléments diminuant le frottement.

14. Chaîne d'entraînement destinée à l'utilisation dans un convoyeur en spirales selon l'une quelconque des revendications précédentes.
